# EUROPEAN PATENT SPECIFICATION

(11) **EP 1 271 030 B1**
(45) Date of publication and mention of the grant of the patent: **06.08.2008**
(21) Application number: 02012041.6
(22) Date of filing: 31.05.2002
(51) Int. Cl.: F16K 31/40

(54) **Solenoid operated pilot valve**
Elektromagnetisch vorgesteuertes Ventil
Soupape pilotée à commande électromagnétique

(43) Date of publication of application: 02.01.2003
(73) Proprietor: RPE S.R.L., 22070 CARBONATE (IT)
(72) Inventor: Fornasari, Paolo, 33084 Cordenons, PN (IT)
(74) Representative: Eccetto, Mauro

(56) References cited:
- WO-A-96/11350
- FR-A- 2 093 381
- GB-A- 1 226 481
- US-A- 5 503 362

## Description

The invention relates to a solenoid operated pilot valve, which can be used for controlling the flow of liquids on applications of different kind, such i.e. irrigation plants, wash basins etc.., which is made with such characteristics as to ensure a safe and reliable operation on the time also with different liquid operation pressures, even of not particularly cleaned liquids.

Solenoid valves for controlling flow of liquids for irrigation plants for lawns and cultivations of various kind, for wash basins for public premises and various other applications are known, for example by US-A-5503362, which include an independent low voltage supply battery and comprise a stationary part provided with a threaded inlet sleeve which can be joined to the water supply pipe, and comprises an interchangeable part shaped like a removable cartridge adaptable to be inserted on the stationary part and containing a set of inner component elements adapted to allow or prevent the passage of the liquid from the water supply pipe towards the relative liquid distribution appliance, as well as equipped with at least a liquid delivery conduit arranged in the same appliance.

In particular, such inner components include substantially an elastic membrane made of elastomeric material, secured tightly with its peripheral edge in the interior of the interchangeable part, and shaped centrally with a thickened portion provided with a calibrated through hole for liquid passage, adapted to co-operate with the delivery conduit end portion, in a manner to close such an end portion so as to prevent the liquid from passing through the same conduit, or to open such end portion so as to permit the liquid to pass through said conduit.

The component elements also include an electromagnet supplied from the autonomous battery and co-operating with a permanent magnet having fixed polarities, said electromagnet containing a movable core displaceable axially, which is joined at an end portion thereof to the permanent magnet by a spring and shaped with pointed form at the other end portion thereof, so as to be able to co-operate with the calibrated through hole of the elastic membrane, in the manner to provide for closure of such hole by preventing the liquid passage and compressing sealingly the membrane thickened portion against the delivery conduit end portion, by closing it, when the movable core is displaced on the rest position thereof, by the spring thrust, or opening of such hole with consequent liquid passage, when the spring thrust is ceased and therefore said membrane thickened portion is moved away from the delivery conduit end portion.

Moreover, the electromagnet is associated with per se known electronic sensor means (for example type photocells), which are activated and de-activated manually by the user, in a way to generate a positive pulse in presence of the user manual action, with consequent generation in the electromagnet of a polarity which is opposite to that of the permanent magnet, which produces a reciprocal attraction of the two polarities and therefore the displacement of the movable core in the operative position thereof, against the spring action, and to generate a negative pulse without the user manual action, with consequent generation in the electromagnet of a polarity identical to that of the permanent magnet, which produces a reciprocal repulsion of the two polarities and therefore the displacement of the movable core in the rest position thereof, also urged by the spring thrust.

Finally, in the solenoid valves of this kind the elastic membrane delimites a separate room in the space comprised between it and the permanent magnet and the solenoid valve, and such membrane is also provided with a calibrated and side through hole, adapted to permit the liquid to pass toward the separate room, with consequent liquid pressure balancing inside the separate room, permitting without difficulty the movable core to be displaced from the one to another one of its operative positions.

Therefore, the solenoid valves of this kind operate with reduced electric consumptions, thanks to the presence of the autonomous supply battery and the supply of electric pulses with short duration on the solenoid valve, however they are critical owing to the presence of the two calibrated through holes which, during operation are crossed continuously by the liquid and tend to clog them progressively on the time, owing to any impurity and dirt and to the liquid hardness, which circumstances do not allow in the time a safe and reliable operation of the solenoid valve.

Another drawback of these solenoid valves, also caused by the presence of said calibrated holes, is due to the fact that they are designed with a reduced output and therefore do not lend themselves for the use with plants operating with high water pressures. Finally, another drawback is due to the fact that the movable core isn't stable and can be easily displaced from the respective operative position assumed by it, when the solenoid valve is manipulated or displaced from the installation position thereof, which circumstance therefore makes critical the use of this kind of solenoid valves for applications involving shakings of the appliance.

The object of the invention is to eliminate the above mentioned applicative drawbacks and limits of the present solenoid valves, by means of a solenoid valve made with such characteristics as to ensure a safe and reliable operation on the time, even with different operation pressures of the liquids. This solenoid valve is made with the constructive characteristics substantially described, with particular reference to the patent claims.

The invention will appear more comprehensible from the following description, given solely by way of not-limitative example and with reference to the accompanying drawings wherein:
- Fig. 1 schematically shows a present solenoid valve, displaced in an operative position thereof;
- Fig. 2 schematically shows the solenoid valve of Fig. 1, displaced in another operative position thereof;
- Fig. 3 schematically shows a solenoid valve according to the invention, displaced in an operative position, and made in a first embodiment thereof;
- Fig. 4 schematically shows the solenoid valve of Fig. 3, displaced in another operative position thereof;
- Fig. 5 schematically shows a front view of a constructive item of the present solenoid valve, displaced in the same operative position of Fig. 3 ;
- Fig. 6 schematically shows a plan view of the constructive item of the solenoid valve of Fig. 5 ;
- Fig. 7 schematically shows a front view of the same constructive item of the solenoid valve of Fig. 5, displaced in the same operative position of Fig. 4;
- Fig. 8 schematically shows a plan view of the constructive item of the solenoid valve of Fig. 7;
- Fig. 9 schematically shows the solenoid valve according to the invention, displaced in the same operative position of Fig. 3, and made in a second embodiment thereof;
- Fig. 10 schematically shows a plan view of a constructive item of the solenoid valve of Fig. 9 ;
- Fig. 11 schematically shows the solenoid valve of Fig. 9, displaced in the same operative position of Fig. 4;
- Fig. 12 schematically shows a plan view of a constructive item of the solenoid valve of Fig. 11 ;
- Fig. 13 schematically shows a cutaway front view of the solenoid valve of Fig. 9, in a constructive variant and displaced in an operative position thereof;
- Fig. 14 schematically shows a plan view of the solenoid valve of Fig. 13, cutaway along the line A-A;
- Fig. 15 shows a constructive item of the solenoid valve of Fig. 14, cutaway along the line B-B;
- Fig. 16 schematically shows a cutaway front view of the solenoid valve of Fig. 13, displaced in another operative position thereof;
- Fig. 17 schematically shows a plan view of the solenoid valve of Fig. 16, cutaway along the line C-C.

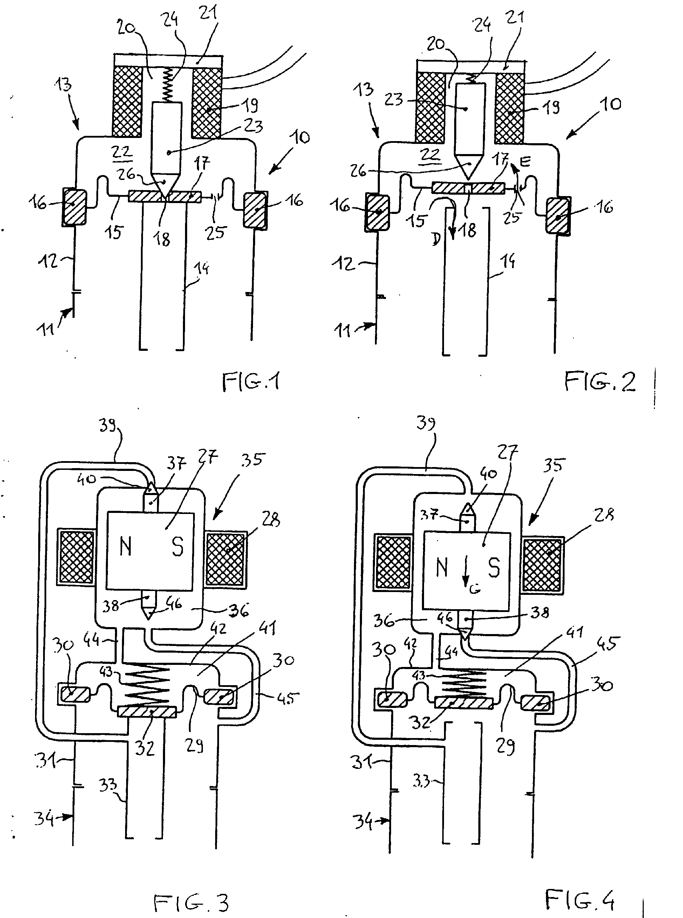

Figs. 1 and 2 schematically illustrate a currently used solenoid valve, marked with the reference numeral 10, for controlling the flow of liquids on irrigation plants for lawns and cultivations of various kind, wash basins and similar appliances. This solenoid valve substantially comprises a stationary part 11 provided with a threaded inlet sleeve (not shown) joined with a liquid inlet pipe 12 and which can be joined with the water inlet conduit (also not shown). The solenoid valve also comprises an interchangeable part 13 shaped like a removable cartridge adaptable by insertion in the stationary part 11 and provided with at least a delivery conduit 14 of the liquid in the relative appliance, as well as containing a set of component elements which will be described, adapted to permit or prevent the passage of the liquid from the water inlet conduit towards the utilized appliance. The component elements of the interchangeable part 13 comprise an elastic membrane 15 made of elastomeric material, secured at its enlarged peripheral edge 16 tightly with the inlet pipe 12, and shaped centrally with a thickened portion 17 provided with a calibrated through hole 18 for liquid passage, which is adapted to co-operate with the free end portion of the delivery conduit 14 so as to be able to close or open it, thereby by preventing or permitting the liquid passage through such conduit. The component elements also comprise a circular electromagnet 19 secured to the free end portion of the inlet pipe 12 and supplied with electric pulses by an autonomous battery (not shown), said electromagnet delimiting an inner cavity 20 closed on the upper side by a permanent magnet 21 having fixed polarities, applied tightly against the free end portion of the inlet pipe 12, thereby delimiting a separate room 22 in the space comprised between said permanent magnet and said elastic membrane. A movable core 23 is housed in the inner cavity 20 and is movable axially and connected at its end portion with the permanent magnet 21 by means of a spring 24 and is shaped at its other end portion of sharpened form, so as to be able to close the through hole 18, by preventing the liquid from passing therethrough, or to be moved away from such through hole, by opening it and permitting the liquid to pass therethrough.

Finally, the elastic membrane 15 is also provided with a calibrated side through hole 25, for the passage of the liquid in the interior of the separate room 22, which provides for a balancing of the water pressure in the same room, thereby permitting the movable core 23 to be displaced axially in the two operative positions thereof. Fig. 1 shows the movable core 23 displaced in the rest position thereof, in which it is pushed by the spring 24 with its tip 26 against the through hole 18 of the membrane thickened portion 17, thereby closing such hole and pushing the membrane thickened portion 17 against the free end portion of the delivery conduit 14. Then, under these conditions the liquid is prevented from passing from the inlet pipe 12 toward the delivery conduit 14, while the separate room 22 fills itself with liquid coming from the inlet pipe 12, through the through hole 25 of the elastic membrane 15, with consequent balancing of the relative pressure internally the same room. Fig. 2 shows the movable core 23 displaced in the operative position thereof, on the condition in which the electromagnet 19 is supplied with a positive electric pulse having short duration, generated by a per se known electronic sensor (not shown) operatively connected with said electromagnet and activated by the user presence, and under these circumstances the electromagnet generates a polarity which is opposite than that of the permanent magnet, with consequent reciprocal attraction of the two polarities and displacement of the movable core 23 towards such permanent magnet, against the action of the spring 24, and moving away of the tip 26 of said movable core with respect to the calibrated hole, and return of the membrane thickened portion 17 into its starting position.

Then, under these conditions such membrane thickened portion is moved away from the free end portion of the delivery conduit 14, allowing the liquid to pass from the inlet pipe 12 to such delivery conduit, both in the direction of the arrows D, and the direction of the arrows E by passing through the through hole 25, the separate room 22 and the through hole 18.

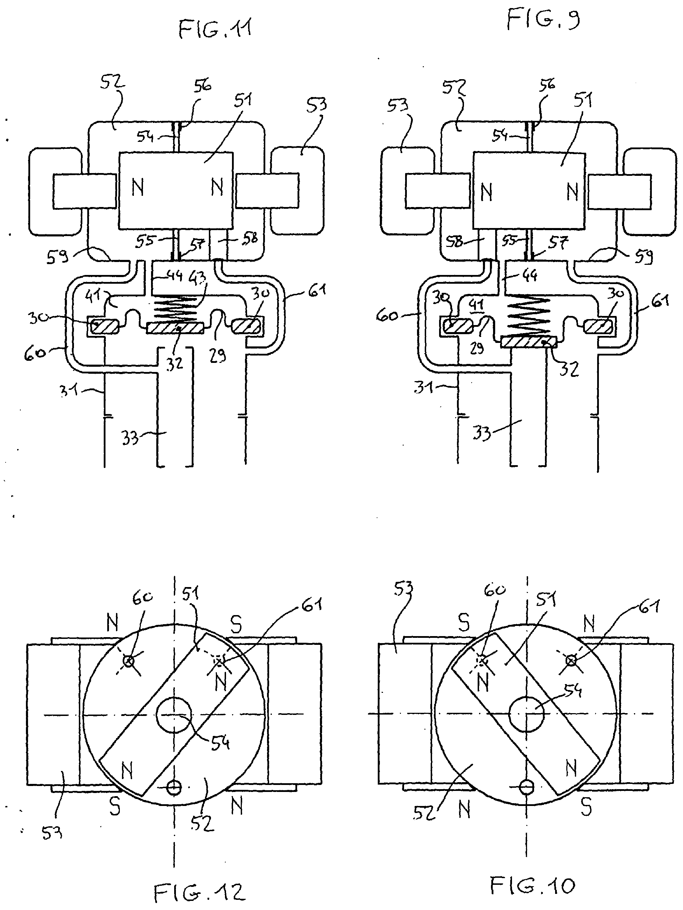

Afterwards, such movable core 23 is returned in the rest position of Fig. 1 when the user isn't present near the electronic sensor, in which condition this latter generates a negative electric pulse of short duration which is supplied by the electromagnet 19, by generating into it a polarity which is identical to that of the permanent magnet, with consequent reciprocal repulsion of the two polarities and displacement of the movable core 23 against the membrane thickened portion 17, also urged by the thrust of the spring 24. Therefore, it appears evident that in this kind of solenoid valves the separate room 22 and the through holes 18 and 25 are always crossed by the liquid, with consequent drawbacks described previously. In order to avoid that these drawbacks occur, it is suggested the solenoid valve according to the present invention, which is described in detail with reference to Figs. 3-8, in which a first embodiment thereof is illustrated, and to Figs. 9-12 in which a second embodiment thereof is illustrated.

This solenoid valve, which is called three ways pilot solenoid valve, is utilized particularly for controlling either large membrane-type water valves or valves for hydraulic or pneumatic cylinders, etc.. In the Figs. 3 and 4 the solenoid valve is described, which is displaced respectively in the rest position thereof, in which the liquid is prevented from passing therethrough, and the operation position thereof, in which the liquid can pass therethrough.

In the Fig. 3, in particular, it is noted that also in this case the solenoid valve comprises at least a permanent magnet 27 having fixed polarities, at least an electromagnet 28 supplied with short positive or negative electric pulses, generated by an autonomous electric battery (not shown) connected with the same electromagnet, and also comprises an elastic membrane 29 made of elastomeric material, secured at it enlarged peripheral edge 30 tightly in the liquid inlet pipe 31 and shaped centrally with a thickened portion 32 performing the same function of the previously described thickened portion 17, and therefore co-operating with the free end portion of the delivery conduit 33. The structural configuration of the solenoid valve is the same of the previously described one, namely a stationary part 34 which can be joined with the water supply pipe (not shown) and provided with the inlet pipe 31, and an interchangeable part 35 shaped like a removable cartridge which can be inserted in the stationary part and is provided with the delivery conduit 33 and the above mentioned component elements. However, in this case these component elements are realized and connected together in a different manner, as it will be described in detail hereinafter.

In particular, the permanent magnet 27 is housed in a closed separate room 36 situated inside the electromagnet 28, in a manner that to be arranged in a concentric position inside this electromagnet, slightly moved away from this latter. Furthermore, such permanent magnet 27 is joined at its upper and lower end portions with a respective movable stud 37 and 38 having a tapered end portion of sharpened form, and can be displaced axially in the interior of the separate room 36 from a rest position to an operative position thereof, respectively illustrated in the Figs. 3 and 4 and described in detail hereinafter, in a manner to stay steadily in the respectively attained position, without being able to be displaced from the same position, even in cases in which the appliance into which the solenoid valve is applied is shaked. In turn, the separate room 36 is connected by a conduit 39 directly with the delivery conduit 33, said conduit ending in the separate room on a position coinciding with and moved away on the upper part with respect to the movable stud 37, and being so dimensioned as to permit the tip 40 of said movable stud to penetrate partially therein, with consequent closing of the mouthpiece of the conduit 39, when the permanent magnet 27 is displaced in the rest position of Fig. 3, and not to be clogged by the tip 40 of the movable stud 37, with consequent opening of the mouthpiece of the conduit 39, when the permanent magnet is displaced in the operative position of Fig. 4, in which said movable stud 37 and its tip 40 are moved away on the lower part from said conduit mouthpiece. Besides, as visible further on, the elastic membrane 29 is still housed in a corresponding separate room 41, delimited in the space comprised between it and the closed end portion 42 of the inlet pipe 31, and is urged by a spring 43 housed in the room 41 to compress its thickened portion 32 against the free end portion of the delivery conduit 33 (see Fig. 3). Finally, in this case the elastic membrane 29 is completely not provided with calibrated through holes, and the separate room 41 is communicating with the other separate room 36 exclusively by means of a conduit 44, through which the liquid passes for determining balancing of the respective pressure of the same room. In turn, the inlet pipe 31 is communicating with the separate room 36 by means of a further conduit 45, ending into it on a position coinciding with and moved away on the lower part with respect to the movable stud 38, said further conduit being so dimensioned as to permit the tip 46 of said movable stud to penetrate partially therein, with consequent closing of the mouthpiece of the conduit 45, when the permanent magnet 27 is displaced in the operative position of Fig. 4, and not to be clogged by the tip 46 of the movable stud 38, with consequent opening of the mouthpiece of the conduit 45, when the permanent magnet is displaced in the rest position of Fig. 3, in which said movable stud 38 and its tip 46 are moved away on the upper part from said conduit mouthpiece. The scope of the conduits 39 and 45 is that to allow the liquid to pass towards the separate room 36, and therefore to balance the relative pressure in the same room, with consequent axial displacement without difficulty of the permanent magnet 27 and the relative movable studs 37 and 38 from the one to the other one of the operative positions of Figs. 3 and 4.

In the Figs, 5-8 it is shown the manner in which the permanent magnet 27 and the relative movable studs 37 and 38 are displaced axially into their two operative positions.

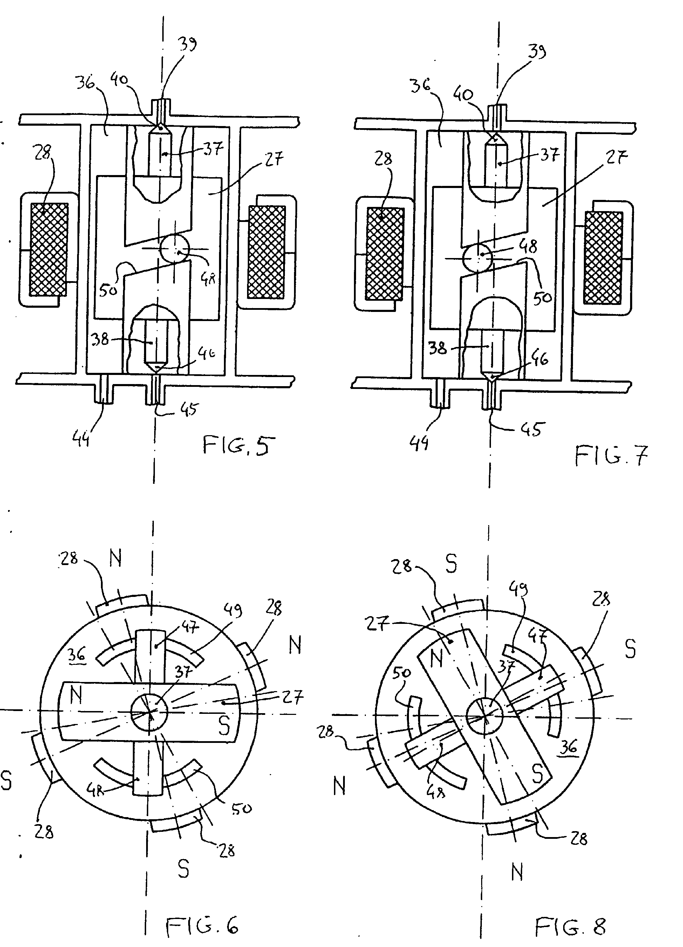

For this scope, it is noted that such permanent magnet 27 is joined with two identical bars 47 and 48, applied orthogonally to the two larger surfaces of the same magnet and slidable with their free end portions into corresponding helical guide hollows 49 and 50, provided along the side walls of the room 36, in such a manner that the axial displacement of the permanent magnet occurs with a rotation of the magnet with a determinate angle about its vertical axis of symmetry, determined by the sliding of the bars 47 and 48 in the corresponding guide hollows 49 and 50, from the rest position illustrated in Figs. 5 and 6 to the operative position illustrated in Figs. 7 and 8, and vice versa. In particular, when the solenoid valve is displaced initially in the rest position of Fig. 3, and the electromagnet 28 isn't supplied with electric pulses, in the condition in which the polarities of both the electromagnet and the permanent magnet 27 are identical and these polarities remain unchanged until the electromagnet isn't supplied, the mouthpiece of the conduit 39 is closed by the movable stud 37 and the mouthpiece of the conduit 45 is opened owing to the moving away of the movable stud 38. Moreover, in this condition since the membrane thickened portion 32 is continuously compressed against the free end portion of the delivery conduit 33, by closing it, the liquid which is introduced through the inlet pipe 31 does not enter the delivery conduit 33, while enters the separate room 36, by passing through the conduit 45, thereby providing for the balancing of the water pressures in the same room. In this way, the room 36 is completely filled with liquid, which cannot enter the delivery conduit 33 through the conduit 39, since this latter is closed by the movable stud 37. Besides, such liquid enters also the remaining separate room 41, by filling it, by passing through the conduit 44, and thereby providing for the balancing of water pressures also into such room. When the solenoid valve is displaced in the operative position of Fig. 4, in which the electromagnet 28 is supplied with a short positive electric pulse, generated by the appliance electronic sensor when the user is present, or by control means of conventional type associated with the appliance and adapted to activate the same sensor, in the electromagnet it is produced another polarity, which is opposite than that of the permanent magnet, with consequent reciprocal attraction between such polarities which produces the rotation of the permanent magnet 27 in such a direction as to provide for the axial displacement downward (arrow G) thereof, with consequent closing of the mouthpiece of the conduit 45 by the movable stud 38 and opening of the mouthpiece of the conduit 39 by the movable stud 37, and such permanent magnet remains steadily in this position even when the pulse ceases, owing to the steady attraction between the polarities of both the permanent magnet and the iron of the magnetic yoke of the electromagnet.

Then, under these conditions the liquid contained in the separate rooms 36 and 41 enters the delivery conduit 33 through the conduit 39, with a water pressure sufficient to raise the membrane thickened portion 32 from the free end portion of the delivery conduit 33, by opening it, and thereby permitting the liquid to pass from the inlet pipe 31 to the delivery conduit 33, with consequent steady compression upwards of the elastic membrane 29 against the action of spring 43.

Besides, under these conditions the liquid passing through the inlet pipe 31 cannot more enter the rooms 36 and 41 through the conduit 45, since this latter is closed by the movable stud 38, so that such rooms are not more filled with liquid. Afterwards, as soon as the electronic sensor is de-activated at the end of cleaning, irrigation etc.. operations, without the user or being operated by the appliance control means, in the condition in which the electronic sensor generates a negative electric pulse which is supplied to the electromagnet 28, with consequent generation in this latter of a polarity identical to that of the permanent magnet 27 and reciprocal repulsion between these polarities, the permanent magnet 27 is being rotated in a direction inverse to the preceding one, by returning in the rest position thereof of Fig. 3.

In the Figs. 9-12 it is illustrated a second embodiment of the solenoid valve according to the invention, in which it is noted the same which is displaced in the rest position (Figs. 9 and 10) and the operative position (Figs. 11 and 12).

In particular, in the Figs. 9 and 10 it is noted that also in this case the solenoid valve comprises a permanent magnet 51 having fixed polarities, housed in a separate closed room 52 situated inside the electromagnet 53, in the same manner of the previously described solution, and in addition comprises an elastic membrane which is housed, shaped and operating in the same manner than that previously described, and which is marked with the same reference numerals, together with the liquid inlet and delivery conduits. As previously, the room 41 in which the elastic membrane 29 is housed, is joined with the room 52 through a conduit 44, while the permanent magnet 51 cannot more be displaced axially as previously, rather it rotates exclusively and with a limited angle of rotation about a median vertical axis of rotation, constituted by two studs 54 and 55 secured on the upper and lower part to said permanent magnet and housed into corresponding seats 56 and 57 provided in the separate room 52. Also in this case, the permanent magnet is displaced with the same previously described criteria, by assuming stable operative positions which remain unchanged. Moreover, in this case such permanent magnet is joined in the lower part with at least a sliding block 58 made of suitable material with low friction factor, preferably Teflon or equivalent plastic material, which during the rotation of the permanent magnet 51 slides against the surface of the lower wall 59 of the room 52, which is made with a suitable anti-friction material.

The scope of the sliding block 58 is to be displaced into coincidence with the mouthpieces of either one conduit 60 or 61, connecting the separate room 52 respectively with the delivery conduit 33 and the inlet pipe 31, said mouthpieces being provided through the lower wall 59 of said room and offset angularly from each other of an amount identical to the rotation path of the permanent magnet 51 and the relative sliding block 58. Consequently, the sliding block determines the closing of the conduit onto which it is respectively positioned and the opening of the remaining conduit.

In particular, in the rest position of Figs. 9 and 10, such sliding block determines the closing of the conduit 60 and opening of the conduit 61, in the condition in which the liquid enters the rooms 52 and 41 through the conduit 61, thereby producing the balancing of the relative pressure therein, and filling with liquid the same rooms. In the operative position of Figs. 1 and 12, the sliding block 58 determines the opening of the conduit 60 and closing of the conduit 61, in the condition in which on the one hand the introduction of additional liquid in the rooms 52 and 41 is prevented, and on the other hand the liquid contained into these rooms enters the delivery conduit 33, by passing though the conduit 60, by producing the same results of the previously described solution.

Therefore, it appears evident that this kind of solenoid valve allows a safe and reliable operation on the time, owing to the fact that its elastic membrane isn't provided with the calibrated through holes and hence does not more originate the previously described drawbacks, and that the permanent magnet assumes always stable operative positions, which cannot be modified in the case of handlings or displacements of the solenoid valve from its installation position.

In particular, these stable operative positions are attained with a limited rotation from the one to the other one of the two different operative positions of the permanent magnet, which is housed into an electromagnet which can be supplied with electric pulses, in order to perform the function of servo control, and such limited rotation is obtained both by guiding the movement of the permanent magnet along helical paths, with consequent axial displacement of the same permanent magnet, and by displacing the permanent magnet around a vertical axis of rotation without axial displacements, and letting it arriving and stopping in either one of its two operative positions.

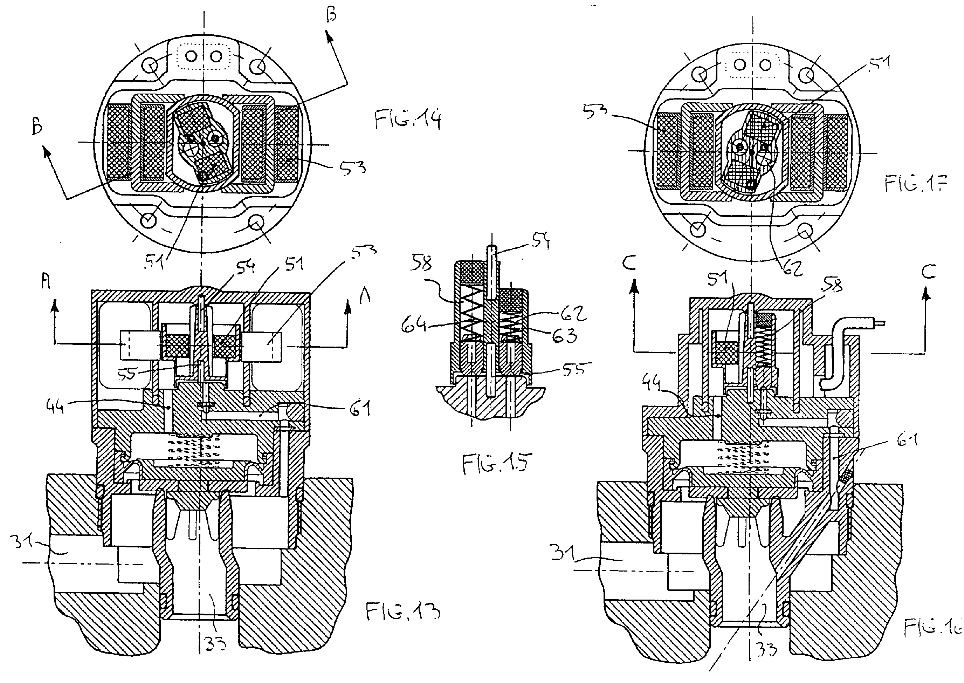

Moreover, this solenoid valve can operate also with different water operation pressures, even of high value, and therefore lends itself to be used on appliances of various kind, obviously by dimensioning adequately the cross-sections of the conduits and the separate rooms for each specific application. Finally, the remaining Figures show a cross-section of the solenoid valve of Figs. 9-12, in a constructive variant thereof, and in particular Figs. 13 and 14 show such solenoid valve in the rest position thereof and Figs. 16 and 17 show the same in the operative position thereof, while Fig. 15 shows a constructive item of the solenoid valve referred to.

In this case, the solenoid valve is constituted by the same constructive components of the preceding solenoid valve, and differs therefrom in that to be advantageously provided with a further sliding block 62, in addition to the sliding block 58, which is made and positioned like this latter block and is arranged along the same sliding path thereof, in a position adequately spaced away from the other sliding block, in such a way as to permit to displace each sliding block over the nearer conduit to be closed, with a shorter sliding path and therefore with a smaller angle of rotation of the permanent magnet 51 and such sliding blocks 58 and 62. In particular, in the Fig. 15 it is noted one of the sliding blocks (in this case, the sliding block 62) positioned onto one of the conduits, and urged by a spring 63 with a high compression force against such conduit, in order to contrast water pressures of different values, while the other sliding block 58 is urged by a spring 64 against the conduit joined with the delivery conduit 33, which spring develops a compression force which is smaller than the preceding one, in that it must contrast water pressures of smaller value.

## Claims

1. Solenoid operated pilot valve for controlling the flow of liquids in plants for irrigations, wash basins and similar appliances, particularly three-ways pilot solenoid valve for controlling large membrane-type water valves or valves for hydraulic or pneumatic cylinders etc.., comprising at least a liquid inlet pipe which can be joined with the water supply line and provided with at least a tightly sealed element shaped preferably like an elastic membrane, and also comprising at least a liquid delivery conduit, said tightly sealed element being associated with sprung means and co-operating with said delivery conduit in a manner that to determine the closing or opening thereof, respectively for preventing or permitting the liquid to pass from said inlet pipe to said delivery conduit, the valve also comprising electromagnetic means supplied by means of pulses from at least a low voltage direct current electric supply, and generated by sensor means activated and de-activated by the user or by control means of conventional type associated with the respective appliance, and permanent magnet means co-operating with said electromagnetic means in such a way as that their polarities are respectively attracted or rejected by the polarities assumed from time to time by said electromagnetic means, depending on the activated or de-activated condition of said sensor means;
said permanent magnet means (27 ; 51) being associated to guide means (47, 48, 49, 50 ; 54, 55) in order to permit the displacement from a first to a second operative position thereof, and vice versa, for performing the function of servo control;
said permanent magnet means (27 ; 51) being associated with closing means (37, 38 ; 58) and being displaceable from the one to the other operative position thereof only by supplying with electric pulses said electromagnetic means (28 ; 53) and remaining steadily in the respectively attained operative position thereof also after that the electric pulses are ceased, and said closing means (37, 38 ; 58) being adapted to prevent or permit the liquid to pass from said inlet pipe (31) towards said delivery conduit (33), when said permanent magnet means (27 ; 51) are displaced respectively into the first or second operative position thereof;
the valve being **characterized in that** said permanent magnet means (27 ; 51) are contained in at least a first separate closed room (36 ; 52) situated inside said electromagnetic means (28 ; 53) and that said tightly sealed element (29, 32) delimits at least a second separate room (41) with the closed end portion of said inlet pipe (31), said first separate room (36 ; 52) communicating with said second separate room (41) through at least a first conduit (44) and with said delivery conduit (33) and inlet pipe (31) respectively through at least a second conduit (39 ; 60) and a third conduit (45 ; 61), said closing means (37, 38 ; 58) co-operating with said second and third conduit (39 ; 60 ; 45, 61) in a manner to determine in the first operative position thereof the closing of said second conduit (39 ; 60) and the opening of said third conduit (45 ; 61), in the closing condition of said delivery conduit (33) and in the second operative position thereof the opening of said second conduit (39 ; 60) and the closing of said third conduit (45 ; 61), in the opening condition of said delivery conduit (33);
and **in that** said tightly sealed element (29, 32) is not provided with calibrated through holes.

2. Valve according to claim 1, **characterized in that** said guide means comprise a first and a second bar (47, 48) joined orthogonally with said permanent magnet means (27) and slidable with their end portions in a corresponding helical guide hollow (49, 50), provided along the side walls of said first separate closed room (36), in a manner to produce a rotation of said permanent magnet means (27) of a determinate angle about its vertical axis of symmetry, during their axial displacement from the one to the other one operative positions thereof.

3. Valve according to claim 2, **characterized in that** said closing means comprise a first and a second movable stud (37, 38), joined respectively at the upper and lower end portions of said permanent magnet (27) and displaceable axially together with this latter into said first separate closed room (36), from said first to said second operative position thereof, and vice versa, said first and second movable stud (37, 38) being provided with a respective terminal tip (40, 46) which can be inserted into or disengaged from the mouthpiece of the corresponding second or third conduit (39 ; 45).

4. Valve according to claim 1, **characterized in that** said guide means comprise two support studs (54, 55) secured on the upper part of said permanent magnet means (51) and housed into said first separate room (52), adapted to provide for the rotation of said permanent magnet means (51) with a determinate angle of rotation determined from the first to the second operative position thereof, and vice versa.

5. Valve according to claim 4, **characterized in that** said closing means comprise at least a sliding block (58) made of material with low friction factor, preferably Teflon, joined on the lower part with said permanent magnet means (51) and displaceable together with this latter into said first separate closed room (52), from said first to said second operative position, in which said sliding block (58) is displaced in coincidence of the mouthpieces of either one of said second or third conduit (60 ; 61), which are made through the lower wall (59) of said first separate room (52), in positions offset angularly of the same amount of the rotation path of said sliding block (58) and said
permanent magnet means (51), said sliding block (58) being able to be associated with a further sliding block (62) arranged along the same sliding path and spaced away from it in such a way as to displace each block over the nearer conduit to be closed with a shorter sliding path.

6. Valve according to claim 5, **characterized in that** said sliding blocks (58, 62) are urged against each conduit by a respective spring, the compression force of which is larger for the sliding block (62) acting against the conduits having water pressures of different value.

## Patentansprüche

1. Elektromagnetisch vorgesteuertes Ventil zum Steuern des Flusses von Flüssigkeiten in der Bewässerung von Pflanzen, Reinigungsbecken und ähnlichen Vorrichtungen, insbesondere elektromagnetisch vorgesteuerte Dreiwege-Ventile zur Steuerung großer membranartiger Wasserventile oder Ventile für hydraulische oder pneumatische Zylinder und so weiter, zumindest umfassend ein Flüssigkeitseinlassrohr, das mit der Wasserversorgungsleitung verbunden werden kann und mit mindestens einem dicht schließenden Dichtungselement versehen ist, das vorzugsweise als eine elastische Membran ausgebildet ist, und weiter umfassend zumindest eine Flüssigkeitsanlieferungsleitung, wobei das dicht schließende Dichtungselement an Felderelemente gekoppelt ist und kooperiert mit der Flüssigkeitsanlieferungsleitung, der Gestalt, dass es dessen Öffnen oder Schließen bestimmt und jeweils das Fließen von Flüssigkeit von dem Flüssigkeitseinlassrohr zu der Flüssigkeitsanlieferungsleitung verhindert oder zulässt, das Ventil, weiter umfassend, elektromagnetische Mittel, die vorgesehen sind mittels Pulsen von zumindest einer Niederspannungsgleichstromquelle und erzeugt werden von Sensormitteln, die aktiviert und deaktiviert werden durch einen Benutzer oder durch Steuermittel der gewöhnlichen Art, gekoppelt mit der jeweiligen Vorrichtung und Permanentmagnetmittel, kooperierend mit den elektromagnetischen Mitteln in solch einer Weise, dass deren Polung jeweils angezogen oder abgestoßen werden von den Polen, die von Zeit zu Zeit durch die elektromagnetischen Mittel angenommen werden, abhängig von der aktiviert oder deaktiviert Bedingung der Sensormittel;
die Permanentmagnetmittel (27; 51) die gekoppelt sind an Führungsmittel (47, 48, 49, 50; 54, 55), um deren Verschiebung von einer ersten zu einer zweiten wirksamen Position und umgekehrt zu erlauben, um die Funktion einer Bedingungsschaltung auszuführen;
die Permanentmagnetmittel (27, 51) sind gekoppelt mit Schließmitteln (37, 38; 58) und verschiebbar aus deren einer zu deren anderer wirksamen Position allein durch die Versorgung mit elektrischen Pulsen der elektromagnetischen Mittel (28; 53) und Ortsfest in deren jeweiliger eingenommener wirksamer Position auch nach dem die elektrischen Pulse beendet sind und die Schließmittel (37, 38; 58) geeignet sind um das Passieren der Flüssigkeit von dem Einlassrohr (31) hin zu der Flüssigkeitsanlieferungsleitung (33) zu verhindern oder zu erlauben, wenn die Permanentmagnetmittel (27; 51) verschoben werden jeweils in deren erste oder zweite wirksame Position;
das Ventil **dadurch gekennzeichnet, dass** die Permanentmagnetmittel (27; 51) in zumindest einem ersten eigenen geschlossenen Raum (36; 52) enthalten sind, der sich innerhalb der elektromagnetischen Mittel (28; 53) befindet und **dadurch**, dass das dicht schließende Dichtungselement (29, 32) zumindest einen zweiten eignen Raum (41) mit dem geschlossenen Endabschnitt des Einlassrohrs (31) begrenzt, wobei der erste eigene Raum (36; 52) mit dem zweiten eigenen Raum (41) über zumindest eine erste Flüssigkeitsanlieferungsleitung (44) kommuniziert und mit der Anlieferungsleitung (33) und dem Einlassrohr (31), jeweils über mindestens eine zweite Anlieferungsleitung (39; 60) und eine dritte Anlieferungsleitung (45; 61), wobei die Schließmittel (37, 38; 58) mit der zweiten und dritten Anlieferungsleitung (39; 60; 45, 61) in einer Weise kooperieren, die fest legt, dass in deren erster wirksamer Position die zweite Anlieferungsleitung (39; 60) geschlossen wird und das Öffnen der dritten Anlieferungsleitung (45; 61) in der geschlossen - Bedingung der Anlieferungsleitung (33) und in deren zweiter wirksamer Position das Öffnen der zweiten Anlieferungsleitung (39; 60) und das Schließen der dritten Anlieferungsleitung (54; 61) in der geöffnet - Bedingung der Anlieferungsleitung (33);
und **dadurch**, dass das dicht schließende Dichtungselement (29, 32) nicht mit kalibrierten, durchgängigen Löchern versehen ist.

2. Ventil gemäß Anspruch 1, **dadurch gekennzeichnet, dass** die Führungsmittel einen ersten und einen zweiten Riegel (47, 48) umfassen, die orthogonal mit den Permanentmagnetmitteln (27) verbunden sind und gleitfähig mit deren Endabschnitten in einer entsprechenden schraubenförmig ausgesparten Führung (49, 50) sind, die vorgesehen sind, entlang der Seitenwände des ersten eigenen geschlossenen Raums (36) auf solch eine Weise, um eine Rotation des Permanentmagnetmittels (27) um einen bestimmten Winkel um dessen vertikale Symmetrieachse zu bewirken, während dessen axialer Verschiebung von dessen erster zu dessen anderer wirksamer Position verschoben wird.

3. Ventil gemäß Anspruch 2, **dadurch gekennzeichnet, dass** die Schließmittel einen ersten und einen zweiten beweglichen Bolzen (37, 38) umfassen, die jeweils an den oberen und unteren Endabschnitten des Permanentmagneten (27) verbunden sind, und gemeinsam in axialer Richtung verschiebbar mit diesem in den ersten eigenen geschlossenen Raum (36) aus dessen erster in dessen zweite wirksame Position und umgekehrt, wobei der erste und zweite bewegliche Bolzen (37, 38) mit einer entsprechenden Endspitze (40, 46) versehen ist, die eingeführt in oder entfernt werden kann aus dem Mundstück der jeweiligen zweiten oder dritten Anlieferungsleitung (39; 45).

4. Ventil gemäß Anspruch 1, **dadurch gekennzeichnet, dass** die Führungsmittel zwei Tragebolzen (54, 55) umfassen, die an dem oberen Abschnitt der Permanentmagnetmittel (51) befestigt sind, und befindlich innerhalb des ersten getränkten Raums (52), dazu geeignet die Rotation der Permanentmagnetmittel (51) um einen festgelegten Rotationswinkel von dessen erster in dessen zweite wirksame Position und zurück bereit zu stellen.

5. Ventil gemäß Anspruch 4, **dadurch gekennzeichnet, dass** die Verschlussmittel zumindest einen Gleitblock (58), hergestellt aus Materialien mit einem niedrigen Reibungskoeffizienten, vorzugsweise Teflon, verbunden mit dem unteren Abschnitt des Permanentmagnetmittels (51) und verschiebbar gemeinsam mit dem letzteren in den ersten eigenen geschlossenen Raum (52) aus der ersten in die zweite wirksame Position, in welcher der Gleitblock (58), gemeinsam mit dem Mundstück eines der beiden aus der zweiten oder der dritten Anlieferungsleitung (60; 61) verschoben wird, welche ausgebildet werden durch die untere Wand (59) des ersten eigenen Raums (52) in Positionen, die bezüglich eines Winkels versetzt sind um den selben Betrag des Rotationspfads des Gleitblocks (58) und der Permanentmagnetmittel (51), wobei der Gleitblock verbindbar ist mit einem weiteren Gleitblock (62) der entlang desselben Gleitpfads angeordnet ist und räumlich entfernt von diesem beabstandet ist, auf solch eine Weise, dass jeder Block verschoben wird über die näher gelegene Anlieferungsleitung, so dass diese mit einem kürzeren Gleitpfad verschlossen wird.

6. Ventil gemäß Anspruch 5, **dadurch gekennzeichnet, dass** die Gleitblöcke (58, 62), vorgespannt sind gegen jede der Anlieferungsleitungen mittels einer entsprechenden Feder, deren Kompressionskraft jeweils größer ist für den Gleitblock (62), welcher gegen Anlieferungsleitungen mit verschiedenem Wasserdruckwert, wirkt.

## Revendications

1. Electrovanne pilote pour contrôler l'écoulement de liquides dans des installations d'irrigation, des lavabos et des appareils similaires, particulièrement une électrovanne pilote à trois voies pour contrôler de grandes vannes de débit d'eau du type à membrane ou des vannes pour des vérins hydrauliques ou pneumatiques, etc., comprenant au moins un tuyau d'entrée de liquide qui peut être joint à la ligne d'alimentation en eau et pourvu d'au moins un élément parfaitement étanche dont la forme est de préférence semblable à une membrane élastique, et comprenant également au moins un conduit de distribution de liquide, ledit élément parfaitement étanche étant associé à des moyens élastiques et coopérant avec ledit conduit de distribution de manière à déterminer la fermeture ou l'ouverture de celui-ci, respectivement pour empêcher ou permettre le passage du liquide dudit tuyau d'entrée vers ledit conduit de distribution, la vanne comprenant également des moyens électromagnétiques alimentés au moyen d'impulsions provenant d'au moins une alimentation électrique continue basse tension, et générées par des moyens formant capteur activés et désactivés par l'utilisateur ou par des moyens de commande de type classique associés à l'appareil respectif, et des moyens formant aimant permanent coopérant avec lesdits moyens électromagnétiques de manière à ce que leurs polarités soient respectivement attirées ou repoussées par les polarités adoptées d'un instant à un autre par lesdits moyens électromagnétiques, en fonction de la condition activée ou désactivée desdits moyens formant capteur ;
lesdits moyens formant aimant permanent (27 ; 51) étant associés à des moyens de guidage (47, 48, 49, 50 ; 54, 55) afin de permettre le déplacement d'une première à une deuxième position de fonctionnement de ceux-ci, et vice versa, pour effectuer la fonction de servocommande ;
lesdits moyens formant aimant permanent (27 ; 51) étant associés à des moyens de fermeture (37, 38 ; 58) et pouvant être déplacés de l'une à l'autre des positions de fonctionnement de ceux-ci uniquement en appliquant des impulsions électriques auxdits moyens électromagnétiques (28 ; 53) et restant continûment dans leur position de fonctionnement respectivement atteinte également une fois que les impulsions électriques ont cessé, et lesdits moyens de fermeture (37, 38 ; 58) étant adaptés pour empêcher ou permettre le passage du liquide dudit tuyau d'entrée (31) vers ledit conduit de distribution (33), lorsque lesdits moyens formant aimant permanent (27 ; 51) sont respectivement déplacés dans la première ou la deuxième position de fonctionnement de ceux-ci ;
la vanne étant **caractérisée en ce que** lesdits moyens formant aimant permanent (27 ; 51) sont contenus dans au moins une première chambre fermée séparée (36 ; 52) située à l'intérieur desdits moyens électromagnétiques (28 ; 53) et **en ce que** l'élément parfaitement étanche (29, 32) délimite au moins une deuxième chambre séparée (41) avec la partie d'extrémité fermée dudit tuyau d'entrée (31), ladite première chambre séparée (36 ; 52) communiquant avec ladite deuxième chambre séparée (41) par l'intermédiaire d'au moins un premier conduit (44) et avec lesdits conduit de distribution (33) et tuyau d'entrée (31) respectivement par l'intermédiaire d'au moins un deuxième conduit (39 ; 60) et un troisième conduit (45 ; 61), lesdits moyens de fermeture (37, 38 ; 58) coopérant avec lesdits deuxième et troisième conduits (39 ; 60 ; 45, 61) de manière à déterminer, dans leur première position de fonctionnement, la fermeture dudit deuxième conduit (39 ; 60) et l'ouverture dudit troisième conduit (45 ; 61), dans la condition de fermeture dudit conduit de distribution (33) et, dans leur deuxième position de fonctionnement, l'ouverture dudit deuxième conduit (39 ; 60) et la fermeture dudit troisième conduit (45 ; 61), dans la condition d'ouverture dudit conduit de distribution (33) ;
et **en ce que** ledit élément parfaitement étanche (29, 32) n'est pas pourvu de trous traversants calibrés.

2. Vanne selon la revendication 1, **caractérisée en ce que** lesdits moyens de guidage comprennent des première et deuxième barres (47, 48) jointes orthogonalement auxdits moyens formant aimant permanent (27) et pouvant coulisser avec leurs parties d'extrémité dans un évidement de guidage hélicoïdal (49, 50) correspondant, prévu le long des parois latérales de ladite première chambre fermée séparée (36), de manière à produire une rotation desdits moyens formant aimant permanent (27) d'un angle déterminé autour de leur axe vertical de symétrie, pendant leur déplacement axial de l'une à l'autre de leurs positions de fonctionnement.

3. Vanne selon la revendication 2, **caractérisée en ce que** lesdits moyens de fermeture comprennent des première et deuxième tiges mobiles (37, 38), jointes respectivement aux parties d'extrémité supérieure et inférieure dudit aimant permanent (27) et pouvant être déplacées axialement avec ce dernier dans ladite première chambre fermée séparée (36), de ladite première à ladite deuxième position de fonctionnement de celui-ci, et vice versa, lesdites première et deuxième tiges mobiles (37, 38) étant pourvues d'une extrémité terminale (40, 46) respective qui peut être insérée dans ou désengagée de l'embouchure du deuxième ou du troisième conduit (39 ; 45) correspondant.

4. Vanne selon la revendication 1, **caractérisée en ce que** lesdits moyens de guidage comprennent deux tiges de support (54, 55) fixées sur la partie supérieure desdits moyens formant aimant permanent (51) et logées dans ladite première chambre séparée (52), adaptées pour assurer la rotation desdits moyens formant aimant permanent (51) d'un angle de rotation déterminé qui est déterminé de la première à la deuxième position de fonctionnement de ceux-ci, et vice versa.

5. Vanne selon la revendication 4, **caractérisée en ce que** lesdits moyens de fermeture comprennent au moins un bloc coulissant (58) constitué d'un matériau avec un faible coefficient de frottement, de préférence du Téflon, joint sur la partie inférieure auxdits moyens formant aimant permanent (51) et pouvant être déplacé avec ces derniers dans ladite première chambre fermée séparée (52), de ladite première à ladite deuxième position de fonctionnement, dans laquelle ledit bloc coulissant (58) est déplacé de manière à coïncider avec les embouchures de l'un ou l'autre dudit deuxième ou dudit troisième conduit (60 ; 61), qui sont réalisées à travers la paroi inférieure (59) de ladite première chambre séparée (52), à des positions décalées angulairement de la même quantité du trajet de rotation dudit bloc coulissant (58) et desdits moyens formant aimant permanent (51), ledit bloc coulissant (58) pouvant être associé à un autre bloc coulissant (62) agencé le long du même trajet de coulissement et espacé de celui-ci de manière à déplacer chaque bloc sur le conduit le plus proche devant être fermé avec un plus court trajet de coulissement.

6. Vanne selon la revendication 5, **caractérisée en ce que** lesdits blocs coulissants (58, 62) sont poussés contre chaque conduit par un ressort respectif, dont la force de compression est plus grande pour le bloc coulissant (62) agissant contre les conduits ayant des pressions d'eau de différentes valeurs.
